Europäisches Patentamt

European Patent Office

Office européen des brevets

(19)

(11) Numéro de publication : **0 066 746**
**B1**

(12) **FASCICULE DE BREVET EUROPÉEN**

(45) Date de publication du fascicule du brevet :
09.10.85

(21) Numéro de dépôt : **82104378.3**

(22) Date de dépôt : **19.05.82**

(51) Int. Cl.⁴ : **C 04 B 35/10, C 04 B 41/85,
H 01 M 10/39**

(54) **Procédé de préparation de pièces en alumine bêta-alcaline notamment pour générateurs électrochimiques sodium-soufre.**

(30) Priorité : **27.05.81 FR 8110614**

(43) Date de publication de la demande :
**15.12.82 Bulletin 82/50**

(45) Mention de la délivrance du brevet :
**09.10.85 Bulletin 85/41**

(84) Etats contractants désignés :
**AT BE CH DE FR GB IT LI LU NL SE**

(56) Documents cités :
**EP-A- 0 046 357**
**FR-A- 1 490 198**
**FR-A- 1 491 674**
**FR-A- 2 304 587**
**FR-A- 2 429 188**
**FR-A- 2 455 012**
**US-A- 4 021 255**

(73) Titulaire : **COMPAGNIE GENERALE D'ELECTRICITE**
**Société anonyme dite:**
**54, rue La Boétie**
**F-75382 Paris Cedex 08 (FR)**

(72) Inventeur : **Desplanches, Gérard**
**6, Résidence les Rieux**
**F-91120 Palaiseau (FR)**
Inventeur : **Dumas, Jean-Pierre**
**15, avenue Jean Moulin**
**Villemoisson-sur-Orge**
**F-91360 Epinay-sur-Orge (FR)**

(74) Mandataire : **Weinmiller, Jürgen et al**
**Zeppelinstrasse 63**
**D-8000 München 80 (DE)**

EP 0 066 746 B1

Jouve, 18, rue St-Denis, 75001 Paris, France

**Description**

La présente invention concerne un procédé de préparation de pièces en alumine bêta alcaline pour générateurs électrochimiques sodium-soufre.

On sait que les alumines bêta alcalines, et notamment l'alumine bêta sodique, trouvent à l'heure actuelle d'importantes applications en tant qu'électrolyte solide dans les générateurs sodium-soufre.

On rappelle brièvement qu'un procédé de fabrication de telles pièces, par exemple de tubes, consiste à effectuer les opérations successives suivantes :

— on réalise un mélange intime de poudres d'alumine et de carbonate de sodium, en quantités respectives telles que l'on obtienne un rapport $Al_2O_3/Na_2O$ prédéterminé,

— on chauffe en creuset ouvert ledit mélange intime ;

— on laisse refroidir librement ledit mélange ;

— on broie la poudre ainsi obtenue ;

— on procède à la mise en forme des pièces ;

— on procède au frittage de ces dernières.

Le frittage est réalisé dans une enceinte que l'on chauffe à une température de 1 600 à 1 700 °C environ, pouvant être maintenue 30 minutes à 4 heures.

Cependant dans les générateurs mettant en œuvre des électrolytes solides confectionnés en alumines bêta alcalines de compositions conventionnelles, on s'aperçoit, à l'issue d'un certain nombre de cycles charge-décharge, que la quantité théorique de courant de recharge du générateur devient supérieure à la quantité de courant nécessaire.

Un tel phénomène, qui résulte de pertes faradiques par conduction électronique au niveau dudit électrolyte, est un signal qui annonce la mise hors service du générateur.

La présente invention permet de remédier à de tels inconvénients.

L'invention a pour objet un procédé de préparation de pièces d'alumine bêta alcaline, dans lequel on effectue les étapes successives suivantes :

A) on réalise un mélange intime comprenant des poudres d'alumine et de carbonate de sodium, en quantités respectives telles que l'on obtienne un rapport $Al_2O_3/Na_2O$, compris entre 5 et 11

B) on chauffe en creuset ouvert ledit mélange intime,

C) on laisse refroidir librement ledit mélange,

D) on broie la poudre ainsi obtenue,

E) on procède à la mise en forme desdites pièces,

F) on introduit lesdites pièces dans une enceinte de frittage,

G) on procède au frittage de ces dernières, procédé caractérisé par le fait que l'on introduit dans ladite enceinte de frittage au moins un composé choisi dans le groupe formé par $AlCl_3$,

les boranes, les halogénures de bore, les silanes, les halogénures de silicium et le borax, composé apte au cours du frittage à se décomposer et à former sur au moins l'une des parois desdites pièces une couche mince d'un verre présentant une conductivité ionique élevée vis-à-vis des ions sodium.

L'invention sera décrite ci-après plus en détail à l'aide de plusieurs exemples de réalisation.

Au préalable, on réalise un mélange intime de poudres d'alumine alpha et de carbonate de sodium, en quantités respectives telles que l'on obtienne de l'alumine bêta alcaline avec un rapport $Al_2O_3/Na_2O$, compris entre 5 et 11.

Avantageusement on peut incorporer audit mélange du carbonate de lithium et (ou) de la magnésie de manière connue.

Un tel mélange est disposé dans un creuset ouvert de sorte que la réaction s'effectue en atmosphère non confinée.

Ledit creuset est introduit dans un four et porté à une température comprise entre 1 150° et 1 300 °C, par exemple 1 200 °C, maintenue de 1 à 5 heures.

A l'issue du chauffage on laisse refroidir librement le creuset. L'alumine bêta sodique ainsi obtenue est alors broyée jusqu'à obtention d'une fine poudre.

On procède à la mise en forme des pièces, de tubes notamment, et cela par exemple par compression isostatique.

On procède alors au frittage des pièces, lequel, conformément à l'invention, est réalisé de la façon suivante :

Les pièces sont disposées dans une enceinte de frittage que l'on introduit dans un four.

On dépose durant ledit frittage, sur au moins la paroi de la pièce destinée à être mise ultérieurement en contact avec le sodium dans le générateur électrochimique sodium-soufre, ou sur les deux parois, une mince couche d'un verre dont l'épaisseur est de l'ordre de quelques microns, par exemple comprise entre 1 et 20 microns.

Selon des modes de réalisation particuliers de l'invention, un tel verre peut avoir pour formule molaire 33 $Na_2O$, 67 $B_2O_3$ ou bien 27,5 $Na_2O$, 27,5 $B_2O_3$, 45 $SiO_2$ ou bien 12,5 $Na_2O$, 75 $B_2O_3$, 12,5 $Al_2O_3$ et il présente une bonne conductivité ionique des ions sodium.

Dans le but d'effectuer un tel dépôt, on injecte dans l'enceinte de frittage un gaz contenant les éléments constituant les verres, avec de l'oxygène.

Toutefois, le constituant alcalin du verre, à savoir $Na_2O$ dans le cas des exemples décrits ci-dessus, est en règle générale apporté par l'alumine bêta alcaline elle-même.

Il peut être de même pour $Al_2O_3$ lorsque le verre comporte un tel constituant ; cependant dans le cas de quantités importantes d'$Al_2O_3$, on injecte dans l'enceinte de frittage, conjointement à l'oxygène, $AlCl_3$ par exemple.

Pour obtenir le constituant $B_2O_3$, on peut injecter, conjointement à l'oxygène, un borane tel que $BH_3$, ou un halogénure de bore, tel que $BCl_3$ ou $BBr_3$ par exemple.

Pour obtenir le constituant $SiO_2$, on peut injecter, conjointement à l'oxygène, un silane, tel que $SiH_4$ ou un halogénure de silicium, tel que $SiCl_4$ ou $SiHCl_3$ par exemple.

Le composé injecté peut être dilué dans un gaz inerte, tel que l'argon ou l'hélium.

Par exemple pour effectuer un dépôt de $Na_2O$, $B_2O_3$ on injecte dans l'enceinte durant le frittage un halogénure de bore ($BCl_3$ ou $BBr_3$) avec de l'oxygène, pouvant être dilué dans un gaz inerte tel que l'argon et l'hélium, et cela pendant un temps et un débit prédéterminés afin d'obtenir une couche d'épaisseur donnée. On notera que dans ce cas le sodium entrant dans la composition du verre provient uniquement de l'alumine bêta sodique constituant les pièces.

Une variante consiste à disposer dans le fond de l'enceinte de frittage avant son introduction dans le four, un produit solide qui, en se décomposant au cours du frittage, forme la couche de verre.

Par exemple, on disposera dans l'enceinte une quantité prédéterminée de borax pour former la couche de verre $Na_2O$, $B_2O_3$.

On va donner ci-après quelques exemples concrets de mise en œuvre du procédé selon l'invention.

### Exemple 1

On injecte dans l'enceinte de frittage contenant un tube représentant une surface globale de parois de 660 cm², 330 cm³ de $BCl_3$ dilué dans 8 500 cm³ d'oxygène soit un débit total des gaz de 8 830 cm³ pendant 20 minutes. La couche ainsi réalisée présente une épaisseur de 2 microns environ.

### Exemple 2

On introduit dans l'enceinte de frittage contenant le même tube que précédemment 0,5 g de borax déshydraté.

La couche ainsi réalisée présente une épaisseur de 10 microns environ.

Les pièces d'électrolyte solide selon l'invention assurent une durée de vie très élevée des générateurs sodium-soufre dans lesquels elles sont mises en œuvre.

Pour fixer les idées, un générateur sodium-soufre dans lequel on utilise un électrolyte en alumine bêta sodique conventionnelle se révèle défaillant à l'issue de 7 jours de cycles charge-décharge intensifs.

Au contraire, des générateurs dans lesquels on met en œuvre des électrolytes en alumine recouverts d'une mince couche de verre selon l'invention conservent leurs caractéristiques initiales à l'issue de 10 jours, toutes choses égales par ailleurs.

L'invention est avantageusement mise en œuvre dans les générateurs sodium-soufre pour traction électrique.

### Revendications

1. Procédé de préparation de pièces d'alumine bêta alcaline dans lequel on effectue les étapes successives suivantes :

A) on réalise un mélange intime comprenant des poudres d'alumine et de carbonate de sodium en quantités respectives telles que l'on obtienne un rapport $Al_2O_3/Na_2O$, compris entre 5 et 11.

B) on chauffe en creuset ouvert ledit mélange intime,

C) on laisse refroidir librement ledit mélange,

D) on broie la poudre ainsi obtenue,

E) on procède à la mise en forme desdites pièces,

F) on introduit lesdites pièces dans une enceinte de frittage,

G) on procède au frittage de ces dernières, procédé caractérisé par le fait que l'on introduit dans ladite enceinte de frittage au moins un composé choisi dans le groupe formé par $AlCl_3$, les boranes, les halogénures de bore, les silanes, les halogénures de silicium et le borax, composé apte au cours du frittage à se décomposer et à former sur au moins l'une des parois desdites pièces une couche mince d'un verre présentant une conductivité ionique élevée vis-à-vis des ions sodium.

2. Procédé selon la revendication 1, caractérisé par le fait que ledit composé est injecté en présence d'oxygène dans ladite enceinte à l'état gazeux durant le frittage selon un débit et un temps prédéterminés en fonction de l'épaisseur de ladite couche mince à réaliser.

3. Procédé selon la revendication 2, caractérisé par le fait que le verre formé présente une formule molaire choisie dans le groupe comprenant 33 $Na_2O$, 67 $B_2O_3$ ; 12,5 $Na_2O$, 75 $B_2O_3$, 12,5 $Al_2O_3$ ; 27,5 $Na_2O$, 27,5 $B_2O_3$, 45 $SiO_2$.

4. Procédé selon la revendication 3, caractérisé par le fait que le constituant $Na_2O$ du verre est apporté par l'alumine bêta alcaline elle-même.

5. Procédé selon l'une des revendications 3 et 4, caractérisé par le fait que le constituant $B_2O_3$ du verre est obtenu par injection, conjointement à l'oxygène, d'un composé choisi parmi les boranes et les halogénures de bore.

6. Procédé selon l'une des revendications 3 à 5, caractérisé par le fait que le constituant $Al_2O_3$ du verre est apporté par l'alumine bêta alcaline et par injection de $AlCl_3$ conjointement à l'oxygène.

7. Procédé selon l'une des revendications 3 à 5, caractérisé par le fait que le constituant $SiO_2$ du verre est obtenu par injection, conjointement à l'oxygène, d'un composé choisi parmi les silanes et les halogénures de silicium.

8. Procédé selon l'une des revendications 5 à 7, caractérisé par le fait que le composé injecté est dilué dans un gaz inerte.

9. Procédé selon la revendication 1, caractérisé par le fait que ledit composé est disposé dans ladite enceinte à l'état solide préalablement à l'opération de frittage et en quantité prédéterminée en fonction de l'épaisseur de ladite couche mince à réaliser.

10. Procédé selon la revendication 9, caractérisé par le fait que ledit composé comporte au moins du borax.

11. Procédé selon l'une des revendications précédentes, caractérisé par le fait que la couche de verre a une épaisseur comprise entre 1 et 20 micromètres.

## Claims

1. A method of preparing alcaline beta alumina objects in which the following successive steps are carried out :

A) an intimate mixture is realized, comprising alumina and sodium carbonate powders in such quantities, that a ratio $Al_2O_3/Na_2O$ of between 5 and 11 is obtained,

B) said mixture is heated in an open crucible,

C) the mixture is cooled down freely,

D) the powder thus obtained is crushed,

E) said objects are shaped,

F) said objects are introdused into a sintering enclosure

G) the objects are sintered, .

characterized in that into said sintering enclosure, at least one compound chosen from the group comprising $AlCl_3$, the boranes, the boron halogenides, the silanes, the silicium halogenides, and borax, which compound is apt to decompose during the sintering process and to build up on at least one of the walls of said objects a thin layer of a glass presenting a high ionic conductivity for the sodium ions.

2. A method according to claim 1, characterized in that said compound is injected in the gaseous state and in the presence of oxygen into said enclosure during the sintering process according to a predetermined flow rate and time duration depending on the thickness of said thin layer to be realized.

3. A method according to claim 2, characterized in that the glass thus obtained presents a molar formula chosen in the group comprising 33 $Na_2O$, 67 $B_2O_3$ ; 12,5 $Na_2O$, 75 $B_2O_3$, 12,5 $Al_2O_3$ ; 27,5 $Na_2O$, 27,5 $B_2O_3$, 45 $SiO_2$.

4. A method according to claim 3, characterized in that the $Na_2O$ component of the glass is provided by the alcaline beta alumina itself.

5. A method according to one of the claims 3 and 4, characterized in that the $B_2O_3$ component of the glass is obtained by injection, together with oxygen, of a compound chosen amongst the boranes and the boron halogenides.

6. A method according to one of the claims 3 to 5, characterized in that the $Al_2O_3$ component of the glass is provided by the alcaline beta alumina and by injection of $AlCl_3$ together with oxygen.

7. A method according to one of the claims 3 to 5, characterized in that the $SiO_2$, component of the glass is obtained by injection, together with oxygen, of a compound chosen amongst the silanes and the silicium halogenides.

8. A method according to one of the claims 5 to 7, characterized in that the injected compound is diluted in an inert gas.

9. A method according to claim 1, characterized in that said compound is disposed in said enclosure in the solid state prior to the sintering process and in a predetermined quantity with respect to the thickness of the thin layer to be realized.

10. A method according to claim 9, characterized in that said compound comprises at least borax.

11. A method according to one of the preceding claims, characterized in that the glass layer has a thickness comprised between 1 and 20 micrometers.

## Patentansprüche

1. Verfahren zur Herstellung von Formstücken aus Beta-Aluminiumoxid-Alkalioxid, bei dem man die folgenden aufeinanderfolgenden Schritte durchführt :

A) man stellt eine innige Mischung her, die Aluminiumoxid- und Natriumkarbonatpulver in solchen Mengen aufweist, daß man ein Verhältnis $Al_2O_3/Na_2O$ erhält, das zwischen 5 und 11 liegt.

B) man erhitzt diese innige Mischung in einem offenen Tiegel,

C) man läßt diese Mischung frei abkühlen,

D) man mahlt das so erhaltene Pulver,

E) man formt die Formstücke,

F) man bringt diese Stücke in einen Sinterbehälter,

G) man sintert die Formstücke, dadurch gekennzeichnet, daß man in den Sinterbehälter mindestens einen Stoff einführt, der aus der Gruppe ausgewählt wird, die von $AlCl_3$, den Boranen, den Borhalogeniden, den Silanen, den Siliziumhalogeniden und Borax gebildet wird, nämlich einen Stoff, der sich während des Sinterns zersetzen und auf mindestens einer der Wände der Formstücke eine dünne Schicht aus einem Glas bilden kann, das eine hohe Ionenleitfähigkeit gegenüber den Natriumionen aufweist.

2. Verfahren nach Anspruch 1, dadurch gekennzeichnet, daß der Stoff in Gegenwart von Sauerstoff in den Behälter im gasförmigen Zustand während des Sinterns gemäß einem vorbestimmten Durchsatz und einer vorbestimmten Zeit in Abhängigkeit von der Dicke der herzustellenden dünnen Schicht injiziert wird.

3. Verfahren nach Anspruch 2, dadurch gekennzeichnet, daß das gebildete Gas eine molare Formel aufweist, die aus der Gruppe ausgewählt wird, die aufweist 33 $Na_2O$, 67 $B_2O_3$ ; 12,5 $Na_2O$, 75 $B_2O_3$, 12,5 $Al_2O_3$ ; 27,5 $Na_2O$, 27,5 $B_2O_3$, 45 $SiO_2$.

4. Verfahren nach Anspruch 3, dadurch gekennzeichnet, daß der Anteil an $Na_2O$ in dem

Glas vom Beta-Aluminiumoxid-Alkalioxid selbst aufgebracht wird.

5. Verfahren nach einem der Ansprüche 3 und 4, dadurch gekennzeichnet, daß der Anteil an $B_2O_3$ im Glas durch Injektion von einem Stoff zusammen mit Sauerstoff erhalten wird, der aus den Boranen und den Borhalogeniden ausgewählt wird.

6. Verfahren nach einem der Ansprüche 3 und 5, dadurch gekennzeichnet, daß der Anteil an $Al_2O_3$ im Glas von Beta-Aluminiumoxid-Alkalioxid und durch Injektion von $AlCl_4$ zusammen mit Sauerstoff aufgebracht wird.

7. Verfahren nach einem der Ansprüche 3 bis 5, dadurch gekennzeichnet, daß der Anteil an $SiO_2$ im Glas durch Injektion eines Stoffes, der aus den Silanen und den Siliziumhalogeniden ausgewählt wird, zusammen mit Sauerstoff aufgebracht wird.

8. Verfahren nach einem der Ansprüche 5 bis 7, dadurch gekennzeichnet, daß der injizierte Stoff mit einem Inertgas verdünnt ist.

9. Verfahren nach Anspruch 1, dadurch gekennzeichnet, daß der Stoff im festen Zustand vor dem Sintern und in einer in Abhängigkeit von der Dicke der herzustellenden dünnen Schicht vorbestimmten Menge in den Behälter eingebracht wird.

10. Verfahren nach Anspruch 9, dadurch gekennzeichnet, daß der Stoff mindestens Borax enthält.

11. Verfahren nach einem der vorstehenden Ansprüche, dadurch gekennzeichnet, daß die Glasschicht eine Dicke zwischen 1 und 20 Mikrometer hat.